# EUROPEAN PATENT SPECIFICATION

(11) **EP 2 974 628 B1**
(45) Date of publication and mention of the grant of the patent: **22.11.2017**
(21) Application number: 15179678.6
(22) Date of filing: 13.12.2011
(51) Int. Cl.: A47J 19/02, A23N 1/02

(54) **APPARATUS FOR EXTRACTING JUICE AND PULP FROM FRUIT OR VEGETABLES**
VORRICHTUNG ZUR SAFT- UND FRUCHTFLEISCHAUSPRESSUNG AUS OBST ODER GEMÜSE
APPAREIL POUR EXTRAIRE DU JUS ET LA PULPE DE FRUITS OU DE LÉGUMES

(30) Priority: 13.12.2010 EP 10194779
(43) Date of publication of application: 20.01.2016
(62) Divisional of application: 11796693.7
(73) Proprietor: Novis AG, 1840 Luxembourg (LU)
(72) Inventor: Steiner, Wolfgang, 2572 Mörigen (CH)
(74) Representative: BOVARD AG

(56) References cited:
- WO-A2-2004/098357
- GB-A- 2 041 727
- US-A- 2 660 211

## Description

The present invention relates to an apparatus for extracting juice and pulp from fruit or vegetables.

Such an apparatus is for example described in US 2,660,211, which comprises a stationary housing, a strainer, that is rotatable within the housing and has a perforated side wall, a grater, a feeding pipe for fruits or vegetables and an outflow spout. A motor unit drives the strainer. In operation the pulp is hurled outwardly by the centrifugal force against the wall of the strainer. The liquid contained in the vegetable material is thus forced out through the perforated wall, whereupon it is collected within the housing and caused to flow out through the spout. In a first embodiment the strainer has a cylindrical shape. A scraping member is manually swingable about a bold to scrape of pulp from the perforated side wall. Thus, pulp subjected to centrifugation may be scraped off by the scraping member, which conveys the pulp into an inner space of the apparatus. In a second embodiment the strainer has a conical perforated wall with a cylindrical upper portion. A scraper is arranged in an opening of the strainer. The resiliency of the scraper is such as to counteract an outwardly directed force acting upon the scraper. The scraper is operated manually by a stop screw, which is used to adjust the scraper to varying distances from the upper cylindrical portion on the strainer. For both embodiments the scrapers are actuated manually, which may be subject of maloperation. Also the operation of the apparatus has to be supervised.

A similar apparatus is described in GB 2 041 727. This battery powered juice extractor comprises an electric motor which drives two co-axial output shafts via a gear box such that the inner shaft rotates continuously and the outer shaft performs rotary oscillating motion. A juice collection trough is detachably mounted on the body. A juice filler and extraction head are nested within the trough with the filter in driving engagement with the outer shaft and the extraction head in driving engagement with the inner shaft. In use, the oscillating motion of the filter helps to dislodge solid matter from the perforate base of the filter, and the solid matter builds up against the side wall of the filter by centrifugal action. The outlet spout of the trough is provided with a valve member for controlling the flow of juice.

It is an object of the present invention to enhance the yield in the extraction of juice and pulp from fruit or vegetables. It is a further object of the present invention to prevent dripping of juice and pulp from the outlet of the apparatus.

According to the invention, an apparatus is provided for processing fruit or vegetables in order to obtain a flowable mass, such as juice or puree, comprising:
a receptacle;
an extraction unit for mechanically extracting juice and pulp from said fruit or vegetables, said unit being located within said receptacle for discharging said juice and pulp into said receptacle;
a motor unit drivingly connected to said extraction unit;
an outlet unit for collecting flowable mass from said receptacle,
said outlet unit comprising:
   a spout duct associated to an opening at the bottom of said receptacle; and
   a valve element for opening and closing said opening;
   said spout duct and said valve element being coupled to each other ("spout operated valve");
   characterized by
   said spout duct being pivotably supported about a horizontal axis and having an inner duct portion extending underneath said opening and an outer duct portion protruding from said apparatus;
   said pivotable spout duct being pivotable between a first position where said spout duct forms a downward slope from its inner duct portion to its outer duct portion and where said valve element is in its opened position, and a second position where said spout duct forms an upward slope from its inner duct portion to its outer duct portion and where said valve element is in its closed position.

Other objects, advantages, features and applications of the invention(s) will become more apparent from the following detailed description of two preferred embodiments, given as examples not to be construed as limiting the scope of the invention(s), when taken in conjunction with the accompanying drawings.

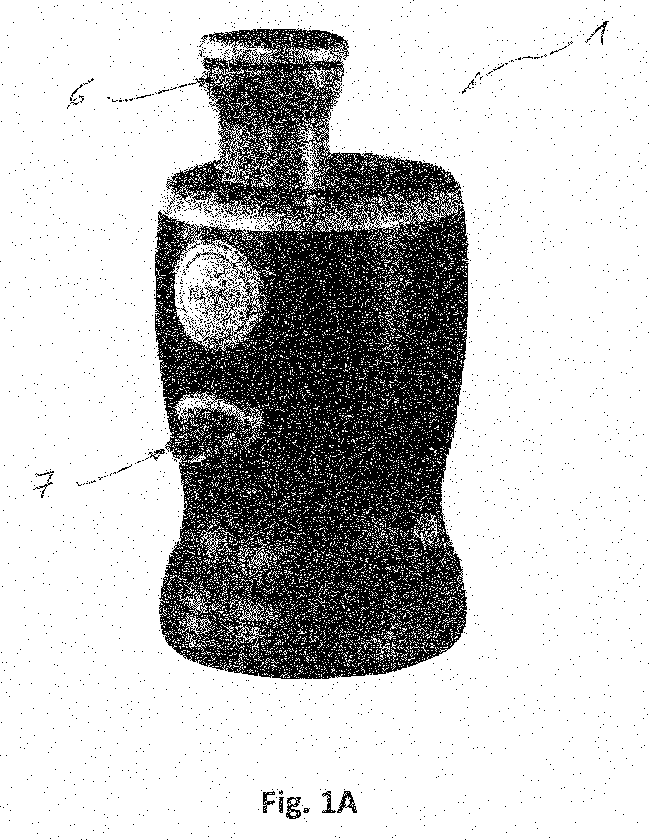

Fig. 1A is a schematic perspective view of the apparatus according to the an embodiment of the invention;

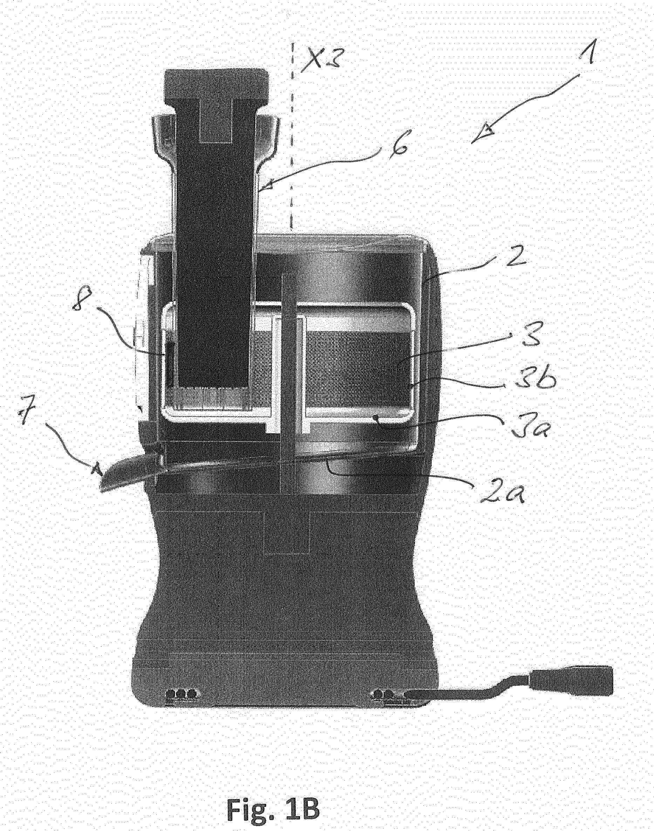

Fig. 1B is a schematic cross-sectional view of a vertical sectional plane of the apparatus of Fig. 1A;

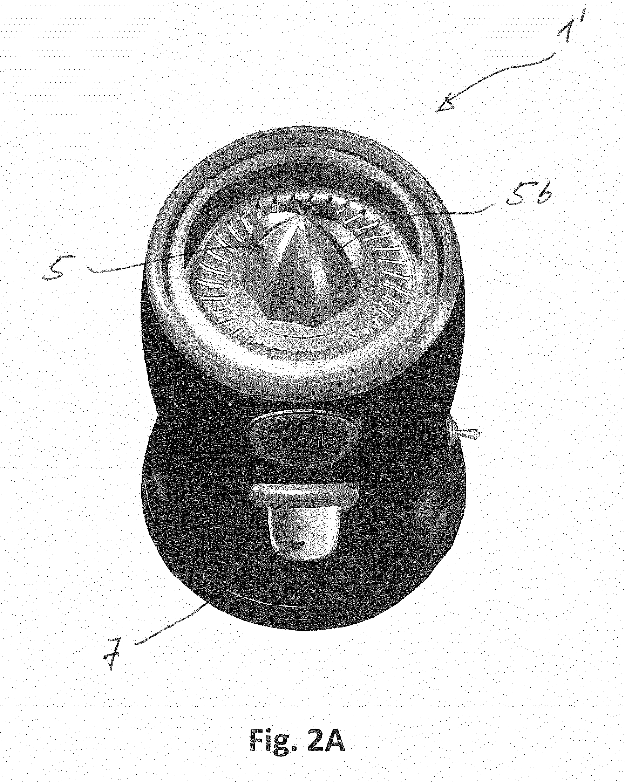

Fig. 2A is a schematic perspective view of the apparatus according to another embodiment of the invention;

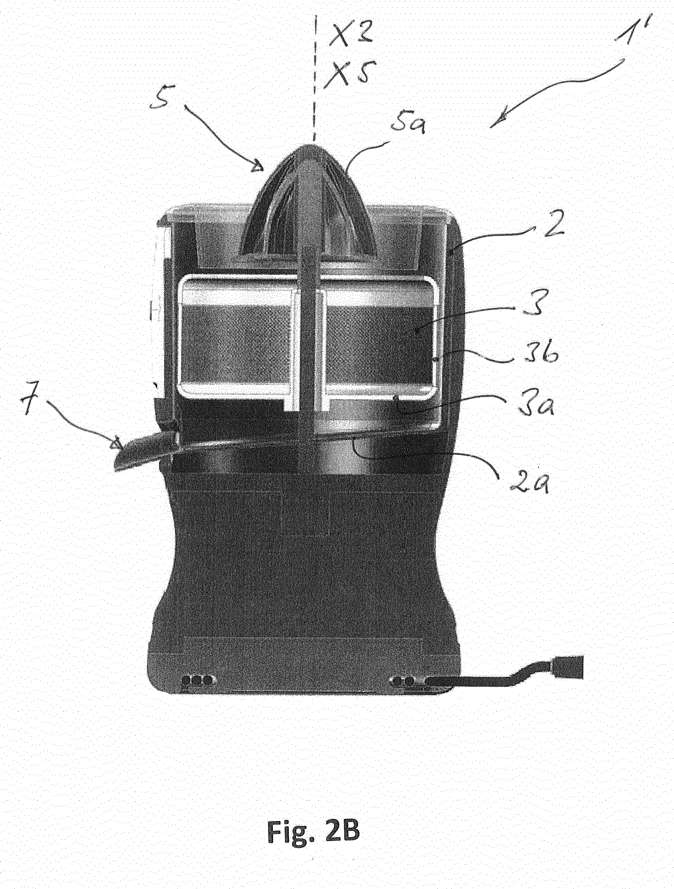

Fig. 2B is a schematic cross-sectional view of a vertical sectional plane of the apparatus of Fig. 2A;

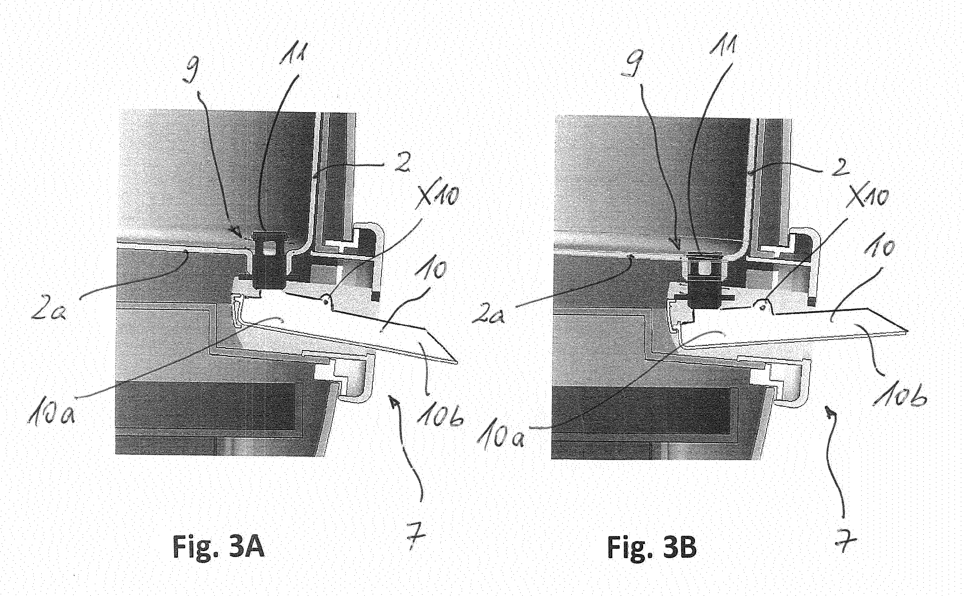

Fig. 3A is a schematic partial cross-sectional view of a vertical sectional plane of the apparatus showing a detail in a first state;
Fig. 3B is a schematic partial cross-sectional view of a vertical sectional plane of the apparatus showing said detail in a second state;

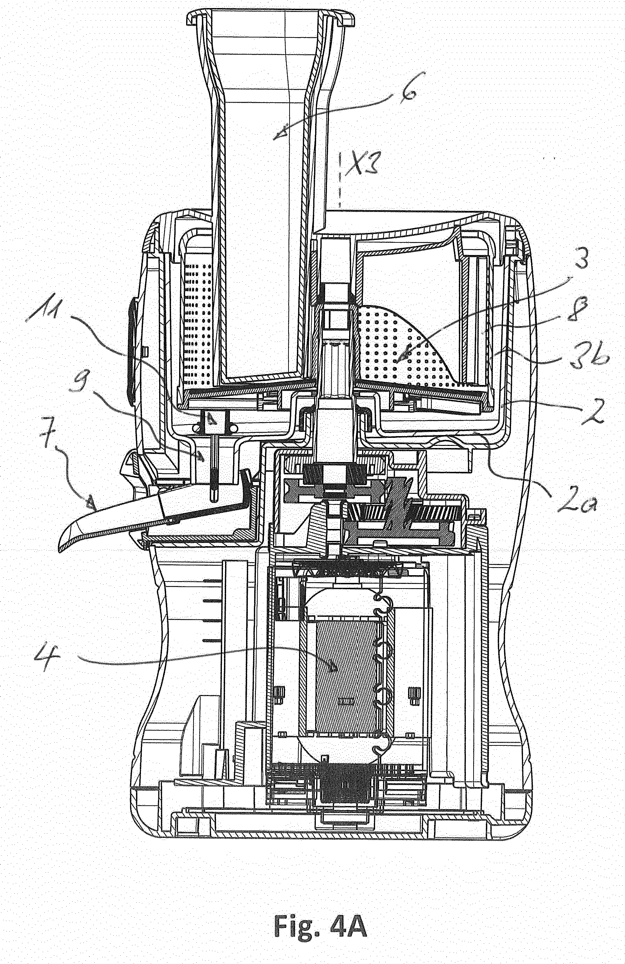

Fig. 4A is a detailed cross-sectional view of a vertical sectional plane of the apparatus according to an embodiment of the invention;

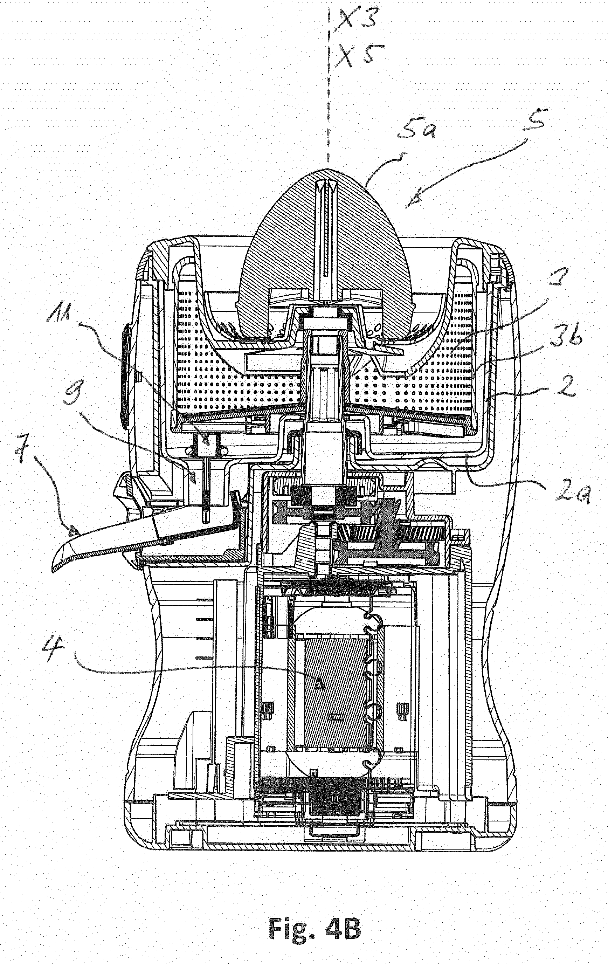

Fig. 4B is a detailed cross-sectional view of a vertical sectional plane of the apparatus according to another embodiment of the invention;

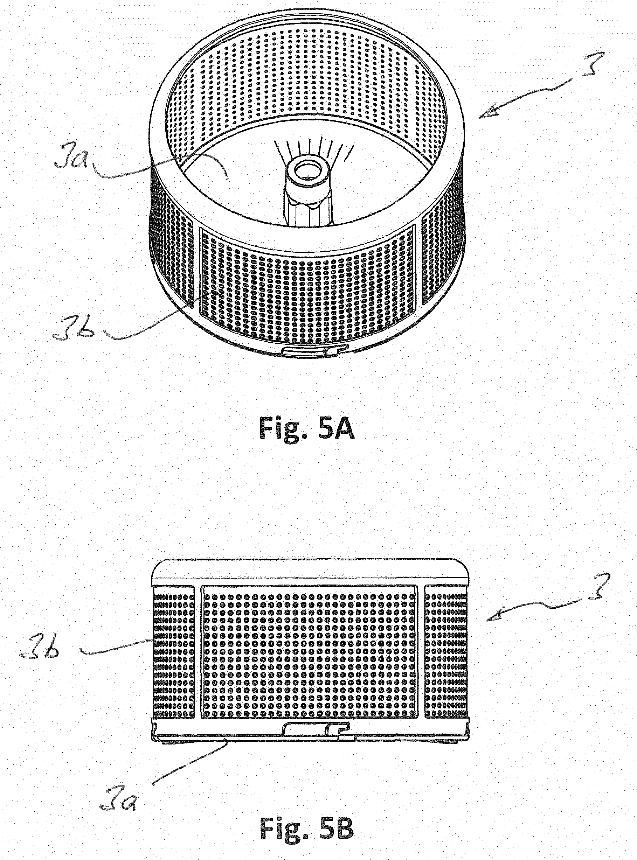

Fig. 5A is a perspective view of an assembled component (strainer) of the apparatus according to both embodiments of the invention;
Fig. 5B is a lateral view of the assembled component of the apparatus according to both embodiments of the inventions;

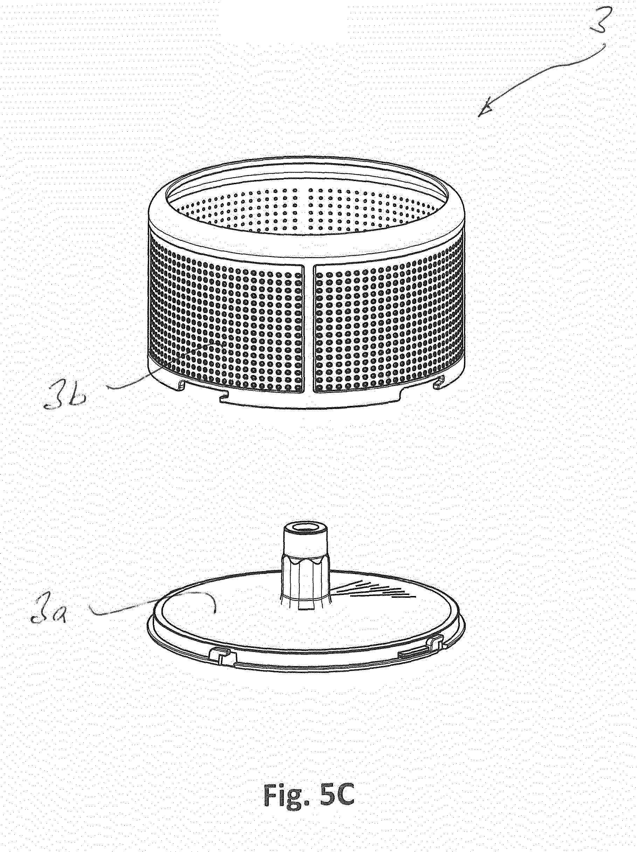

Fig. 5C is a perspective view of the disassembled component of the apparatus according to both embodiments of the invention.

An apparatus 1; 1' for processing fruit or vegetables in order to obtain a flowable mass, such as juice or puree, according to the present invention comprises a receptacle 2, an extraction unit 3, 8; 3, 5 for mechanically extracting juice and pulp from said fruit or vegetables, said extraction unit 3, 8; 3, 5 being located within said receptacle for discharging said juice and pulp into said receptacle 2, a motor unit 4 drivingly connected to said extraction unit 3, 8; 3, 5, an outlet unit 7 for collecting flowable mass from said receptacle 2, wherein said outlet unit comprises a spout duct 10 associated to an opening 9 at the bottom 2a of said receptacle 2, and a valve element 11 for opening and closing said opening 2a, said spout duct 10 and said valve element 11 being coupled to each other, said spout duct 10 being pivotably supported about a horizontal axis X10 and having an inner duct portion 10a extending underneath said opening 9 and an outer duct portion 10b protruding from said apparatus 1; 1', said pivotable spout duct 10 being pivotable between a first position where said spout duct 10 forms a downward slope from its inner duct portion 10a to its outer duct portion 10b and where said valve element 11 is in its opened position, and a second position where said spout duct 10 forms an upward slope from its inner duct portion 10a to its outer duct portion 10b and where said valve element 11 is in its closed position.

In an embodiment, the opening at the bottom of said receptacle opens into a spout duct chamber having a spout duct opening, in which chamber said spout duct is pivotably supported with its inner duct portion located inside said chamber and with its outer duct portion protruding through said spout duct opening.

In another embodiment, said pivotable spout duct and/or said valve element each have a first stop and a second stop limiting their movement between said first position and said second position, respectively.

Optionally, said first stop and said second stop each have a latching function enabling said spout duct and/or said valve element to click (snap) into place when reaching said first stop or said second stop.

In another embodiment, the extraction unit is a strainer 3, preferably having a cylindrical shape, located within said receptacle 2 and rotatable about a strainer axis X3, said strainer 3 having a bottom 3a and a perforated side wall 3b and a citrus mill 5 rotatable about a citrus mill axis X5, said citrus mill 5 having a citrus mill dome 5a provided with protrusions 5b, preferably ribs, at its outer surface, wherein said citrus mill 5 is located within said strainer 3, said strainer 3 is rotatably driven via a strainer power train operatively connected between said motor unit 4 and said strainer 3 and said citrus mill 5 is rotatably driven via a citrus mill power train operatively connected between said motor unit 4 and said citrus mill 5.

In a preferred embodiment, said strainer power train has a strainer transmission ratio SR, defined as strainer rpm divided by motor rpm, and said citrus mill power train has a citrus mill transmission ratio CR, defined as citrus mill rpm divided by motor rpm, and wherein the ratio SR/CR between said strainer transmission ratio SR and said citrus mill transmission ration CR is comprised within 5/1 and 30/1, preferably between 10/1 and 20/1.

Optionally, said strainer has a strainer inner diameter Ri comprised between 10cm and 30cm, preferably between 15cm and 20cm.

Also optionally, said strainer is preferably operated at a rotational speed comprised between 1000rpm and 2000rpm.

In a further embodiment of the invention, the hole diameter of the perforations of said perforated side wall is comprised between 0.5mm and 2mm, preferably between 0.8mm and 1.5mm.

Optionally, the apparatus further comprises a drive shaft operatively connected to said motor unit via said strainer power train and having a drive shaft formation, wherein the bottom of said strainer comprises a bottom formation complementary to said drive shaft formation, for receiving said drive shaft formation in a rotationally fixed manner, and wherein said drive shaft and said bottom can be removably fitted together.

Also, said strainer can comprise a bottom part and a perforated side wall part which can be removably fitted together.

Furthermore, both said bottom part and said perforated side wall part can be made of a polymer material; or said perforated side wall part can comprise a perforated sheet made of stainless steel permanently fixed in a frame made of a polymer material; or said perforated side wall part can be made of stainless steel; and said polymer material being preferably a thermoplastic material.

In another embodiment of the invention, the extraction unit is a cylindrical strainer 3 located within said receptacle 2 and rotatable about its axis of symmetry X3, said cylindrical strainer 3 having a bottom 3a and a perforated side wall 3b.

Optionally, the flexible element 8 located within said strainer 3 and urged against the inside surface of said perforated side wall 3b can be lip-shaped.

Optionally, said flexible element 8 and the inside surface of the perforated wall 3b are in contact with each other along a line of contact. A surface of the flexible element 8 may face the inside surface of the perforated wall 3b and form a wedge-shaped space with it which narrows towards said line of contact.

Optionally, said line of contact between the flexible element 8 and the inside surface of the perforated wall 3b extends in parallel to the axis of symmetry of said cylindrical strainer 3.

Optionally, the flexible element 8 consists of or comprises an elastomeric material, preferably a thermoplastic elastomer.

Optionally, the flexible element 8 comprises a hard core material, preferably a metal or a thermoplastic material, and a soft cover material, preferably an elastomeric material or a thermoplastic elastomer, fitted thereon.

Also, a first portion of said flexible element 8 can be secured to a rigid support element extending within said strainer 3 towards the inside surface of said perforated side wall 3b, and a second portion of said flexible element 8 is urged against the inside surface of said perforated side wall 3b. At least said second portion of the flexible element 8 may be a soft material, preferably an elastomeric material or a thermoplastic elastomer. The rigid support may comprise a support formation and the first portion of said flexible element comprises a flexible element formation complementary to said support formation, for receiving said flexible element formation in said support formation in a form-locking and/or force-locking manner.

Optionally, the apparatus may further comprise a drive shaft operatively connected to said motor unit and having a drive shaft formation, wherein the bottom of said cylindrical strainer 3 comprises a bottom formation complementary to said drive shaft formation, for receiving said drive shaft formation in a rotationally fixed manner, and wherein said drive shaft and said bottom can be removably fitted together.

Optionally, the cylindrical strainer 3 comprises a bottom part and a perforated side wall 3b part that can be removably fitted together. Both said bottom part and said perforated side wall 3b part may be made of a polymer material. Alternatively, the perforated side wall part may comprise a perforated sheet made of stainless steel permanently fixed in a frame made of a polymer material. Alternatively, said perforated side wall part may be made of stainless steel. The polymer material is preferably a thermoplastic material.

## Claims

1. An apparatus (1; 1') for processing fruit or vegetables in order to obtain a flowable mass, such as juice or puree, comprising:
a receptacle (2);
an extraction unit (3, 8; 3, 5) for mechanically extracting juice and pulp from said fruit or vegetables, said unit (3, 8; 3, 5) being located within said receptacle for discharging said juice and pulp into said receptacle (2);
a motor unit (4) drivingly connected to said extraction unit (3, 8; 3, 5);
an outlet unit (7) for collecting flowable mass from said receptacle (2),
said outlet unit comprising:
a spout duct (10) associated to an opening (9) at the bottom (2a) of said receptacle (2); and
a valve element (11) for opening and closing said opening (9);
said spout duct (10) and said valve element (11) being coupled to each other;
**characterized by**
said spout duct (10) being pivotably supported about a horizontal axis (X10) and having an inner duct portion (10a) extending underneath said opening (9) and an outer duct portion (10b) protruding from said apparatus (1; 1');
said pivotable spout duct (10) being pivotable between a first position where said spout duct (10) forms a downward slope from its inner duct portion (10a) to its outer duct portion (10b) and where said valve element (11) is in its opened position, and a second position where said spout duct (10) forms an upward slope from its inner duct portion (10a) to its outer duct portion (10b) and where said valve element (11) is in its closed position.

2. The apparatus according to claim 1, wherein the opening at the bottom of said receptacle opens into a spout duct chamber having a spout duct opening, in which chamber said spout duct is pivotably supported with its inner duct portion located inside said chamber and with its outer duct portion protruding through said spout duct opening.

3. The apparatus according to claims 1 or 2, wherein said pivotable spout duct and/or said valve element each have a first stop and a second stop limiting their movement between said first position and said second position, respectively.

4. The apparatus according to claim 3, wherein said first stop and said second stop each have a latching function enabling said spout duct and/or said valve element to click (snap) into place when reaching said first stop or said second stop.

5. The apparatus according to any one of preceding claims, wherein the extraction unit is a strainer (3), preferably having a cylindrical shape, located within said receptacle (2) and rotatable about a strainer axis (X3), said strainer (3) having a bottom (3a) and a perforated side wall (3b) and a citrus mill (5) rotatable about a citrus mill axis (X5), said citrus mill (5) having a citrus mill dome (5a) provided with protrusions (5b), preferably ribs, at its outer surface, wherein said citrus mill (5) is located within said strainer (3); said strainer (3) is rotatably driven via a strainer power train operatively connected between said motor unit (4) and said strainer (3); and said citrus mill (5) is rotatably driven via a citrus mill power train operatively connected between said motor unit (4) and said citrus mill (5).

6. The apparatus according to claim 5, wherein said strainer power train has a strainer transmission ratio SR, defined as strainer rpm divided by motor rpm, and said citrus mill power train has a citrus mill transmission ratio CR, defined as citrus mill rpm divided by motor rpm, and wherein the ratio SR/CR between said strainer transmission ratio SR and said citrus mill transmission ration CR is comprised within 5/1 and 30/1, preferably between 10/1 and 20/1.

7. The apparatus according to claims 5 or 6, wherein said strainer has a strainer inner diameter Ri comprised between 10cm and 30cm, preferably between 15cm and 20cm.

8. The apparatus according to claim 7, wherein said strainer is preferably operated at a rotational speed comprised between 1000rpm and 2000rpm.

9. The apparatus according to any one of claims 5 to 8, wherein the hole diameter of the perforations of said perforated side wall is comprised between 0.5mm and 2mm, preferably between 0.8mm and 1.5mm.

10. The apparatus according to any one of claims 5 to 9, further comprising a drive shaft operatively connected to said motor unit via said strainer power train and having a drive shaft formation, wherein the bottom of said strainer comprises a bottom formation complementary to said drive shaft formation, for receiving said drive shaft formation in a rotationally fixed manner, and wherein said drive shaft and said bottom can be removably fitted together.

11. The apparatus according to any one of claims 5 to 10, wherein said strainer comprises a bottom part and a perforated side wall part which can be removably fitted together.

12. The apparatus according to claim 11, wherein both said bottom part and said perforated side wall part are made of a polymer material; or wherein said perforated side wall part comprises a perforated sheet made of stainless steel permanently fixed in a frame made of a polymer material; or wherein said perforated side wall part is made of stainless steel; and wherein said polymer material is preferably a thermoplastic material.

13. The apparatus according to any one of the claims 1 to 4, wherein the extraction unit is a cylindrical strainer (3) located within said receptacle (2) and rotatable about its axis of symmetry (X3), said cylindrical strainer (3) having a bottom (3a) and a perforated side wall (3b), a flexible element (8) being located within said strainer (3) and urged against the inside surface of said perforated side wall (3b).

14. The apparatus according to claim 13, wherein said flexible element and the inside surface of the perforated wall are in contact with each other along a line of contact.

15. The apparatus according to claims 13 or 14, wherein the flexible element (8) located within said strainer (3) and urged against the inside surface of said perforated side wall (3b) is lip-shaped.

16. The apparatus according to any one of the claims 13 to 15, wherein a surface of the flexible element (8) faces the inside surface of the perforated wall (3b) and forms a wedge-shaped space with it which narrows towards said line of contact.

17. The apparatus according to any one of the claims 14 to 16, wherein said line of contact between the flexible element (8) and the inside surface of the perforated wall (3b) extends in parallel to the axis of symmetry of said cylindrical strainer (3).

18. The apparatus according to any one of the claims 13 to 17, wherein said flexible element (8) consists of or comprises an elastomeric material, preferably a thermoplastic elastomer.

19. The apparatus according to any one of the claims 13 to 18, wherein said flexible element (8) comprises a hard core material, preferably a metal or a thermoplastic material, and a soft cover material, preferably an elastomeric material or a thermoplastic elastomer, fitted thereon.

20. The apparatus according to any one of the claims 13 to 19, wherein a first portion of said flexible element (8) is secured to a rigid support element extending within said strainer (3) towards the inside surface of said perforated side wall (3b), and a second portion of said flexible element (8) is urged against the inside surface of said perforated side wall (3b).

21. The apparatus according to claim 20, wherein at least said second portion of the flexible element (8) is a soft material, preferably an elastomeric material or a thermoplastic elastomer.

22. The apparatus according to claims 19 or 20, wherein the rigid support comprises a support formation and the first portion of said flexible element comprises a flexible element formation complementary to said support formation, for receiving said flexible element formation in said support formation in a form-locking and/or force-locking manner.

23. The apparatus according to any one of the claims 13 to 22, further comprising a drive shaft operatively connected to said motor unit and having a drive shaft formation, wherein the bottom of said cylindrical strainer (3) comprises a bottom formation complementary to said drive shaft formation, for receiving said drive shaft formation in a rotationally fixed manner, and wherein said drive shaft and said bottom can be removably fitted together.

24. The apparatus according to any one of the claims 13 to 23, wherein said cylindrical strainer (3) comprises a bottom part and a perforated side wall (3b) part which can be removably fitted together.

25. The apparatus according to claim 24, wherein both said bottom part and said perforated side wall (3b) part are made of a polymer material; or wherein said perforated side wall part comprises a perforated sheet made of stainless steel permanently fixed in a frame made of a polymer material; or wherein said perforated side wall part is made of stainless steel; and wherein said polymer material is preferably a thermoplastic material.

26. The apparatus according to any one of the claims 13 to 25, wherein the apparatus comprises an exchangeable extraction unit.

## Patentansprüche

1. Vorrichtung (1; 1') zur Verarbeitung von Frucht oder Gemüse, um eine fliessfähige Masse zu erhalten, wie Saft oder Püree, umfassend:
einen Behälter (2);
eine Extraktionseinheit (3, 8; 3, 5), um Saft und Fruchtfleisch aus der Frucht oder Gemüse mechanisch zu extrahieren, wobei die Einheit (3, 8; 3, 5) in dem Behälter angeordnet ist, um den Saft und das Fruchtfleisch in den Behälter (2) zu abzugeben;
eine Motoreinheit (4) antreibend mit der Extraktionseinheit (3, 8; 3, 5) verbunden;
eine Auslasseinheit (7), um fliessfähige Masse von dem Behälter (2) zu sammeln,
wobei die Auslasseinheit umfasst:
ein Ausgusskanal (10), welcher mit einer Öffnung (9) an dem Boden (2a) des Behälters (2) verbunden ist; und
ein Ventilelement (11) zum Öffnen und Schliessen der Öffnung (2a);
wobei der Ausgusskanal (10) und das Ventilelement (11) miteinander gekoppelt sind,
**dadurch gekennzeichnet, dass**
der Ausgusskanal (10) schwenkbar um eine horizontale Achse (X10) gehalten ist und einen inneren Kanalabschnitt (10a) aufweist, welcher sich unterhalb der Öffnung (9) erstreckt und einen äusseren Kanalabschnitt (10b), welcher von der Vorrichtung (1; 1') vorsteht;
wobei der Ausgusskanal (10) schwenkbar zwischen einer ersten Position ist, in der der Ausgusskanal (10) ein Gefälle von dem inneren Kanalabschnitt (10a) zu dem äusseren Kanalabschnitt (10b) bildet und wobei das Ventilelement (11) in seiner geöffneten Position ist und eine zweite Position, in der der Ausgusskanal (10) eine Aufwärtsneigung von dem inneren Kanalabschnitt (10a) zu dem äusseren Kanalabschnitt (10b) bildet und das Ventilelement (11) in seiner geschlossenen Position ist.

2. Vorrichtung nach Anspruch 1, wobei die Öffnung an dem Boden des Behälters in einer Ausgusskanalkammer mündet, welche eine Ausgusskanalöffnung aufweist, wobei in der Kammer der Ausgusskanal schwenkbar mit dem inneren Kanalabschnitt gehalten ist, welcher innerhalb der Kammer angeordnet ist und mit dem äusseren Kanalabschnitt durch die Ausgusskanalöffnung vorsteht.

3. Vorrichtung nach Ansprüchen 1 oder 2, wobei der schwenkbare Ausgusskanal und/oder das Ventilelement je einen ersten Stopp und einen zweiten Stopp aufweist, um ihre Bewegung zwischen der ersten Position und der zweiten Position jeweils zu begrenzen.

4. Vorrichtung nach Anspruch 3, wobei der erste Stopp und der zweite Stopp je eine Verriegelungsfunktion haben, um den Ausgusskanal und/oder das Ventilelement einzurasten (einzuschnappen), wenn der erste Stopp oder der zweite Stopp erreicht ist.

5. Vorrichtung nach einem der vorhergehenden Ansprüche, wobei die Extraktionseinheit ein Sieb (3) ist, bevorzugt eine zylindrische Form aufweisend, angeordnet in dem Behälter (2) und drehbar um eine Siebachse (X3), wobei das Sieb (3) einen Boden (3a) und eine perforierte Seitenwand (3b) und eine Zitruspresse (5) aufweist, welche drehbar um eine Zitruspresseachse (X5) ist, wobei die Zitruspresse (5) einen Zitruspressedom (5a) aufweist, der Vorsprünge (5b) an der Aussenfläche aufweist, vorzugsweise Rippen, wobei die Zitruspresse (5) in dem Sieb (3) angeordnet ist, wobei das Sieb (3) drehbar mittels eines Siebantriebsstrangs angetrieben ist, welcher zwischen der Motoreinheit (4) und dem Sieb (3) operativ verbunden ist; und die Zitruspresse (5) drehbar mittels eines Zitruspresseantriebsstrang angetrieben ist, welcher zwischen der Motoreinheit (4) und der Zitruspresse (5) operativ verbunden ist.

6. Vorrichtung nach Anspruch 5, wobei der Siebantriebsstrang eine Siebübersetzungsrate SR hat, definiert als Siebumdrehung rpm geteilt durch Motorumdrehung rpm, und der Zitruspresseantriebsstrang eine Zitruspresseübersetzungsrate CR hat, definiert als Zitruspresseumdrehung rpm geteilt durch Motorumdrehung rpm, und wobei das Verhältnis SR/CR zwischen der Siebübersetzungsrate SR und der Zitruspresseübersetzungsrate CR zwischen 5/1 und 30/1 liegt, bevorzugt zwischen 10/1 und 20/1.

7. Vorrichtung nach Anspruch 5 oder 6, wobei das Sieb einen Siebinnendurchmesser Ri aufweist, welcher zwischen 10cm und 30cm liegt, bevorzugt zwischen 15cm und 20cm.

8. Vorrichtung nach Anspruch 7, wobei das Sieb bevorzugt bei einer Drehgeschwindigkeit betrieben ist, welche zwischen 1000rpm und 2000rpm liegen.

9. Vorrichtung nach einem der Ansprüche 5 bis 8, wobei der Lochdurchmesser der Perforationen der perforierten Seitenwand zwischen 0,5mm und 2mm liegt, bevorzugt zwischen 0,8mm und 1,5mm.

10. Vorrichtung nach einem der Ansprüche 5 bis 9, ferner umfassend eine Antriebswelle, welche in Wirkverbindung mit der Motoreinheit über den Siebantriebsstrang steht und eine Antriebswellenform hat, wobei der Boden des Siebs eine Bodenform aufweist, welche zu der Antriebswellenform komplementär ist, um die Antriebswellenform in einer drehfesten Weise aufzunehmen und wobei die Antriebswelle und der Boden trennbar miteinander verbunden werden können.

11. Vorrichtung nach einem der Ansprüche 5 bis 10, wobei das Sieb einen Bodenabschnitt und einen perforierten Seitenwandabschnitt umfasst, welche trennbar miteinander verbunden werden können.

12. Vorrichtung nach Anspruch 11, wobei sowohl der Bodenabschnitt als auch der perforierte Seitenwandabschnitt aus einem Polymermaterial gefertigt sind; oder wobei der perforierte Seitenwandabschnitt ein perforiertes Blech umfasst, welches aus Edelstahl gefertigt und dauerhaft in einem Rahmen befestigt ist, gefertigt aus einem Polymermaterial; oder der perforierte Seitenwandabschnitt aus Edelstahl gefertigt ist, und wobei das Polymermaterial bevorzugt ein thermoplastisches Material ist.

13. Vorrichtung nach einem der Ansprüche 1 bis 4, wobei die Extraktionseinheit ein zylindrisches Sieb (3) ist, welches in dem Behälter (2) angeordnet und drehbar um seine Symmetrieachse (X3) ist, wobei das zylindrische Sieb (3) einen Boden (3a) und eine perforierte Seitenwand (3b) aufweist, ein flexibles Element (8) in dem Sieb (3) angeordnet und gegen die Innenfläche der perforierten Seitenwand (3b) gedrängt ist.

14. Vorrichtung nach Anspruch 13, wobei das flexible Element und die Innenfläche der perforierten Wand entlang einer Kontaktlinie miteinander in Kontakt stehen.

15. Vorrichtung nach Ansprüchen 13 oder 14, wobei das flexible Element (8), welches in dem Sieb (3) angeordnet und gegen die Innenfläche der perforierten Seitenwand (3b) gedrängt ist, lippenförmig ist.

16. Vorrichtung nach einem der Ansprüche 13 bis 15, wobei eine Fläche des flexiblen Elements (8) zu der Innenseite der perforierten Wand (3b) gerichtet ist und mit dieser einen keilförmigen Raum bildet, welcher sich gegen die Kontaktlinie verjüngt.

17. Vorrichtung nach einem der Ansprüche 14 bis 16, wobei sich die Kontaktlinie zwischen dem flexiblen Element (8) und der Innenfläche der perforierten Wand (3b) parallel zu der Symmetrieachse des zylindrischen Siebs (3) erstreckt.

18. Vorrichtung nach einem der Ansprüche 13 bis 17, wobei das flexible Element (8) aus einem elastischen Material besteht oder aufweist, bevorzugt ein thermoplastisches Elastomer.

19. Vorrichtung nach einem der Ansprüche 13 bis 18, wobei das flexible Element (8) einen harten Materialkern umfasst, bevorzugt ein Metall oder ein thermoplastisches Material und ein weiches Deckmaterial, bevorzugt ein elastomeres Material oder ein thermoplastisches Elastomer, darauf angeordnet ist.

20. Vorrichtung nach einem der Ansprüche 13 bis 19, wobei ein erster Abschnitt des flexiblen Elements (8) an einem starren Trägerelement befestigt ist, welches sich in dem Sieb (3) gegen die Innenfläche der perforierten Seitenwand (3b) erstreckt, und ein zweiter Abschnitt des flexiblen Elements (8) gegen die Innenfläche der perforierten Seitenwand (3b) gedrängt ist.

21. Vorrichtung nach Anspruch 20, wobei zumindest der zweite Abschnitt des flexiblen Elements (8) ein weiches Material ist, bevorzugt ein elastisches Material oder ein thermoplastisches Elastomer.

22. Vorrichtung nach Ansprüchen 19 oder 20, wobei der starre Träger eine Trägerform umfasst und der erste Abschnitt des flexiblen Elements eine flexible Elementform umfasst, die komplementär zu der Trägerform ist, um die flexible Elementform in der Trägerform in einer formschlüssigen und/oder kraftschlüssigen Weise aufzunehmen.

23. Vorrichtung nach einem der Ansprüche 13 bis 22, ferner umfassend eine Antriebswelle, welche mit der Motoreinheit operativ verbunden ist und eine Antriebswellenform aufweist, wobei der Boden des zylindrischen Siebs (3) eine Bodenform umfasst, welche komplementär zu der Antriebswellenform ist, um die Antriebswellenform in einer drehfesten Weise aufzunehmen und wobei die Antriebswelle und der Boden trennbar miteinander verbunden sind.

24. Vorrichtung nach einem der Ansprüche 13 bis 23, wobei das zylindrische Sieb (3) einen Bodenabschnitt und einen perforierten Seitenwandabschnitt (3b) umfasst, welche trennbar miteinander verbunden werden können.

25. Vorrichtung nach Anspruch 24, wobei sowohl der Bodenabschnitt als auch der perforierte Seitenwandabschnitt (3b) aus einem Polymermaterial gefertigt sind; oder wobei der perforierte Seitenwandabschnitt ein perforiertes Blech umfasst, gefertigt aus Edelstahl und dauerhaft in einem Rahmen befestigt ist, gefertigt aus einem Polymermaterial; oder wobei der perforierte Seitenwandabschnitt aus Edelstahl gefertigt ist; und wobei das Polymermaterial bevorzugt ein thermoplastisches Material ist.

26. Vorrichtung nach einem der Ansprüche 13 bis 25, wobei die Vorrichtung eine austauschbare Extraktionseinheit umfasst.

## Revendications

1. Appareil (1 ; 1') de traitement de fruits ou légumes afin d'obtenir une masse fluide, telle que du jus ou de la purée, comprenant:
un récipient (2);
une unité d'extraction (3, 8 ; 3, 5) pour extraire mécaniquement le jus et la pulpe dudit fruit ou légume, ladite unité (3, 8 ; 3, 5) étant située dans ledit récipient pour déverser lesdits jus et pulpe dans ledit récipient (2);
une unité motrice (4) reliée à ladite unité d'extraction (3, 8; 3, 5), et entraînant cette dernière;
une unité de sortie (7) pour recueillir la masse fluide dudit réceptacle (2), ladite unité de sortie comprenant:
un canal de déversement (10) associé à une ouverture (9) au fond (2a) dudit réceptacle (2); et
une valve (11) pour l'ouverture et la fermeture de ladite ouverture (9);
ledit canal de déversement (10) et la valve (11) étant couplés l'un à l'autre;
**caractérisé en ce que**
ledit canal de déversement (10) étant monté pivotant autour d'un axe horizontal (X10) et comportant une portion de canal interne (10a) s'étendant sous ladite ouverture (9) et une portion de canal externe (10b) faisant saillie hors dudit appareil (1 ; 1');
ledit canal de déversement (10) pivotant pouvant être pivoté entre une première position où ledit canal de déversement (10) forme une pente descendante entre sa portion de canal interne (10a) et sa portion de canal externe (10b), et où la valve (11) est en position ouverte, et une deuxième position où ledit canal de déversement (10) forme une pente montante entre sa portion de canal interne (10a) et sa portion de canal externe (10b), et où la valve (11) est en position fermée.

2. Appareil selon la revendication 1, dans lequel l'ouverture au fond dudit réceptacle donne sur une chambre de canal de déversement possédant une ouverture de canal de déversement, ledit canal de déversement étant monté pivotant dans ladite chambre, sa portion de canal interne étant située à l'intérieur de ladite chambre et sa portion de canal externe faisant saillie hors de ladite ouverture de canal de déversement.

3. Appareil selon la revendication 1 ou 2, dans lequel ledit canal de déversement pivotant et/ou ladite valve ont chacun une première butée et une deuxième butée limitant leur mouvement entre respectivement ladite première position et ladite deuxième position.

4. Appareil selon la revendication 3, dans lequel ladite première butée et ladite deuxième butée ont chacune une fonction d'encliquetage permettant audit canal de déversement et/ou à ladite valve d'être encliqueté ou clipsé en position lorsqu'il atteint ladite première butée ou ladite deuxième butée.

5. Appareil selon l'une des revendications précédentes, dans lequel l'unité d'extraction est un filtre (3), ayant de préférence une forme cylindrique, situé dans ledit récipient (2) et monté rotatif autour d'un axe de filtre (X3), ledit filtre (3) ayant un fond (3a), une paroi latérale perforée (3b) et un moulin à agrume (5) monté rotatif autour d'un axe de moulin à agrume (X5), ledit moulin à agrume (5) ayant un cône central (5a) muni de saillies (5b), de préférence des nervures, au niveau de sa surface externe, ledit moulin à agrume (5) étant situé dans ledit filtre (3); ledit filtre (3) étant entraîné en rotation par un rouage de transmission de filtre relié de manière opérationnelle entre ladite unité motrice (4) et ledit filtre (3); et ledit moulin à agrume (5) étant entraîné en rotation par un rouage de transmission de moulin à agrume reliant fonctionnellement ladite unité motrice (4) audit moulin à agrume (5).

6. Appareil selon la revendication 5, dans lequel ledit rouage de transmission de filtre possède un rapport de transmission de filtre SR, défini comme le rapport entre le nombre de rotations par minute (rpm) du filtre et celui du moteur, et ledit rouage de transmission de moulin à agrume a un rapport de transmission de moulin à agrume CR, défini comme le rapport entre le nombre de rotations par minute (rpm) du moulin à agrume et celui le moteur, et dans lequel le rapport SR/CR entre ledit rapport de transmission de filtre SR et ledit rapport de transmission de moulin à agrume CR est compris entre 5/1 et 30/1, de préférence entre 10/1 et 20/1.

7. Appareil selon la revendication 5 ou 6, dans lequel ledit filtre a un diamètre interne de filtre Ri compris entre 10 cm et 30 cm, de préférence en 10 cm et 20 cm.

8. Appareil selon la revendication 7, dans lequel ledit filtre est actionné de préférence à une vitesse de rotation comprise entre 1000 rpm et 2000 rpm.

9. Appareil selon l'une des revendications 5 à 8, dans lequel le diamètre des trous relatifs aux perforations de ladite paroi latérale perforée est compris entre 0.5 mm et 2 mm, de préférence entre 0.8 mm et 1.5 mm.

10. Appareil selon l'une des revendications 5 à 9, comprenant en outre un arbre d'entraînement relié fonctionnellement à ladite unité motrice par l'intermédiaire du rouage de transmission du filtre et possédant une forme d'arbre d'entraînement, le fond dudit filtre comprenant une forme de fond complémentaire à ladite forme d'arbre d'entraînement pour recevoir ladite forme d'arbre d'entraînement de manière fixe en rotation, et ledit arbre d'entraînement et ledit fond pouvant être assemblés l'un à l'autre et démontés l'un de l'autre de manière amovible.

11. Appareil selon l'une des revendications 5 à 10, dans lequel ledit filtre comprend un fond et une paroi latérale perforée pouvant être assemblés l'un à l'autre et démontés l'un de l'autre de manière amovible.

12. Appareil selon la revendication 11, dans lequel à la fois ledit fond et ladite paroi latérale perforée sont constitués d'un matériau polymère; ou dans lequel ladite paroi latérale perforée comprend une couche perforée faite d'acier inoxydable fixée à demeure dans un cadre en matériau polymère; ou dans lequel ladite paroi latérale perforée est en acier inoxydable; et dans lequel ledit matériau polymère est de préférence un matériau thermoplastique.

13. Appareil selon l'une des revendications 1 à 4, dans lequel l'unité d'extraction est un filtre cylindrique (3) situé dans ledit réceptacle (2) et tourne autour de son axe de symétrie (X3), ledit filtre cylindrique (3) possédant un fond (3a) et une paroi latérale perforée (3b), un élément flexible (8) étant situé dans ledit filtre (3) et plaqué contre la surface intérieure de ladite paroi latérale perforée (3b).

14. Appareil selon la revendication 13, dans lequel ledit élément flexible et la surface intérieure de la paroi perforée sont en contact mutuel le long d'une ligne de contact.

15. Appareil selon la revendication 13 ou 14, dans lequel l'élément flexible (8) situé dans ledit filtre (3) et plaqué contre la surface intérieure de ladite paroi latérale perforée (3b) possède une configuration en forme de lèvre.

16. Appareil selon l'une des revendications 13 à 15, dans lequel une surface de l'élément flexible (8) fait face à la surface interne de la paroi perforée (3b) et forme avec lui un espace cunéiforme qui s'effile au fur et à mesure qu'on se rapproche de ladite ligne de contact.

17. Appareil selon l'une des revendications 14 à 16, dans lequel ladite ligne de contact entre l'élément flexible (8) et la surface interne de la paroi perforée (3b) s'étend selon une direction parallèle à celle de l'axe de symétrie dudit filtre cylindrique (3).

18. Appareil selon l'une des revendications 13 à 17, dans lequel ledit élément flexible (8) consiste en un matériau élastomère, ou comprend du matériau élastomère, de préférence un élastomère thermoplastique.

19. Appareil selon l'une des revendications 13 à 18, dans lequel ledit élément flexible (8) comprend un noyau dur, de préférence un métal ou un matériau thermoplastique, et un revêtement souple, de préférence un matériau élastomère ou un élastomère thermoplastique, placé sur celui-ci.

20. Appareil selon l'une des revendications 13 à 19, une première partie dudit élément flexible (8) étant fixée à un support rigide s'étendant à l'intérieur dudit filtre (3) dans la direction de la surface interne de ladite paroi latérale perforée (3b), et une deuxième partie dudit élément flexible (8) étant plaquée contre la surface interne de ladite paroi latérale perforée.

21. Appareil selon la revendication 20, dans lequel au moins ladite deuxième partie de l'élément flexible (8) est un matériau souple, de préférence un matériau élastomère ou un élastomère thermoplastique.

22. Appareil selon la revendication 19 ou 20, dans lequel le support rigide comprend une forme de support et la première partie dudit élément flexible comprend une forme d'élément flexible complémentaire à ladite forme du support, pour recevoir ladite forme d'élément flexible dans ladite forme de support par verrouillage par forme et/ou par chassage.

23. Appareil selon l'une des revendications 13 à 22, comprenant en outre un arbre d'entraînement connecté de manière opérationnelle à ladite unité motrice et ayant une forme d'arbre d'entraînement, dans lequel le fond dudit filtre cylindrique (3) comprend une forme de fond complémentaire à ladite forme d'arbre d'entraînement, pour recevoir ladite forme d'arbre d'entraînement de manière fixe en rotation, et dans lequel ledit arbre d'entraînement et ledit fond peuvent être assemblés l'un à l'autre et démontés l'un de l'autre de manière amovible.

24. Appareil selon l'une des revendications 13 à 23, dans lequel ledit filtre cylindrique (3) comprend un fond et une paroi latérale perforée (3b) qui peuvent être assemblés l'un à l'autre et démontés l'un de l'autre de manière amovible.

25. Appareil selon la revendication 24, dans lequel ledit fond et ladite paroi latérale perforée (3b) sont réalisés en matériau polymère; ou dans lequel ladite paroi latérale perforée comprend une couverture perforée en acier inoxydable fixée à demeure dans un cadre en matériau polymère ; ou dans lequel ladite paroi latérale perforée est en acier inoxydable ; et dans laquelle le matériau polymère est de préférence un matériau thermoplastique.

26. Appareil selon l'une des revendications 13 à 25, dans lequel l'appareil comprend une unité d'extraction interchangeable.
